# EUROPÄISCHE PATENTSCHRIFT

(11) **EP 1 082 887 B1**
(45) Veröffentlichungstag und Bekanntmachung des Hinweises auf die Patenterteilung: **18.08.2004**
(21) Anmeldenummer: 00119154.3
(22) Anmeldetag: 05.09.2000
(51) Int. Cl.: A01B 3/42

(54) **Einrichtung zum Wenden eines an einem landwirtschaftlichen Fahrzeug angelenkten Anbaugeräts, insbesondere eines Drehpfluges**
Turning arrangement for an implement coupled to a vehicle, in particular for a reversible plough
Arrangement pour tourner un outil accouplé à un véhicule, en particulier une charrue réversible

(30) Priorität: 07.09.1999 DE 19942504
(43) Veröffentlichungstag der Anmeldung: 14.03.2001
(73) Patentinhaber: ROBERT BOSCH GMBH, 70442 Stuttgart (DE)
(72) Erfinder: Cipa, Dieter, 73734 Esslingen (DE); Koetter, Wolfgang, 71706 Markgroeningen (DE); Romes, Roman, 71292 Friolzheim (DE); Keuper, Gerhard, Dr., 71229 Leonberg (DE); Loedige, Heinrich, 71665 Vaihingen (DE); Falkenhain, Uwe, 74613 Oehringen (DE); Hesse, Horst, Dr., 70195 Stuttgart (DE); Harms, Hans-Heinrich, Prof. Dr., 38300 Wolfenbüttel (DE); Jessen, Sönke, 49406 Barnestorf (DE)
(74) Vertreter: Thürer, Andreas

(56) Entgegenhaltungen:
- EP-A- 0 507 232
- EP-A- 0 626 126
- DE-A- 1 653 525
- DE-A- 3 428 927
- DE-A- 3 501 242
- DE-A- 4 311 275

## Beschreibung

### Stand der Technik

Die Erfindung geht aus von einer Einrichtung zum Wenden eines an einem landwirtschaftlichen Fahrzeug angelenkten Anbaugeräts, insbesondere eines an einem Traktor angebauten Drehpfluges nach der im Oberbegriff des Anspruchs 1 näher angegebenen Gattung.

Es ist schon eine solche Einrichtung zum Wenden eines an einem Traktor angebauten Drehpfluges aus der DE 35 01 242 C2 bekannt. Solche Drehpflüge haben eine hydraulische Drehvorrichtung mit einem doppeltwirkenden Wendezylinder, damit beim Pflügen am Feldrand nach dem Ausheben des Pfluges der Pflugrahmen um 180 Grad um seine Drehachse gewendet werden kann; dadurch läßt sich der ausgehobene Pflug von linkswendend auf rechtswendend oder umgekehrt umstellen, damit nach dem Richtungswechsel des Traktors die Erdscholle immer auf die gleiche Seite gepflügt wird. Ferner ist zum Einstellen der Arbeitsbreite des Pfluges ein doppeltwirkender Stellzylinder vorhanden, der zusammen mit dem Wendezylinder über eine hydraulische Schaltung angesteuert wird. Bei einem solchen Wendevorgang am Feldrand schwenkt zunächst der Stellzylinder den Pflugrahmen auf minimale Breite, um ein mögliches Aufschlagen des drehenden Pflugrahmens auf den Boden zu verhindern. Anschließend dreht der Wendezylinder den Pflug um seine Längsachse. Anschließend stellt der Stellzylinder wieder die ursprünglich eingestellte Arbeitsbreite des Pfluges ein. Dieser Einstellvorgang am Pflug läuft automatisch ab, wozu die hydraulische Schaltung von der Arbeitshydraulik des Traktors mit Druckmittel versorgt wird. Für diese Steuerung sind hier traktorseitig zwei 4/3-Wegeventile vorgesehen. Von Nachteil ist, daß für die Umsteuerung des Druckmittelstromes im oberen Totpunkt des Wendezylinders ein auf dem Pflug angeordnetes, zweites Steuerventil sowie zusätzliche Sperrventile erforderlich sind, wobei das hydromechanisch betätigte Umsteuerventil einen erheblichen Aufwand verursacht. Auch sind die traktorseitigen Steuerventile mechanisch ansteuerbar, so daß sie vom Traktorfahrer von Hand betätigt werden müssen.

Ähnliche Einrichtungen für Drehpflüge sind aus der DE 36 14 622 A1 und DE 42 43 343 C2 bekannt, die jedoch alle mit pflugseitigen, aufwendigen Ventilblöcken arbeiten und bei denen die Umsteuermechanik erhebliche Sorgfalt in der individuellen Abstimmung mit dem Pflug bedingt.

Aus der DE 35 23 775 A1 ist es ferner bekannt, bei einem Drehpflug die Breitenverstellung für den Pflugrahmen selbst und für die einzelnen Pflugkörper über ein pflugseitig angeordnetes Regelventil zu steuern, das von einem traktorseitigen Bedienpult mit Mikrocomputer aus elektrisch ansteuerbar ist. Über die Steuerung des Wendezylinders selbst werden hier keine näheren Angaben gemacht. Die Anordnung des Regelventils für die notwendigen Verstellfunktionen auf dem Anbaugerät hat in vielen Fällen erhebliche Nachteile; auch ist eine elektrische Steckverbindung zwischen Traktor und Pflug erforderlich, die im Betrieb kritisch sein kann.

Ferner ist es aus der EP 0 507 232 B1 auch bekannt, bei einem Traktor mit angehängtem Arbeitsgerät den auf dem Arbeitsgerät angeordneten doppeltwirkenden Arbeitszylinder aus der Hydraulikanlage des Traktors mitzuversorgen, wobei jedoch zusätzliche Umschalt- und Umsteuerventile verwendet werden. Auch wird hier die Steuerelektronik der eigentlichen Hubwerks-Regeleinrichtung auf dem Traktor mit Signalen eines Lagesensors versorgt, der auf dem angehängten Arbeitsgerät angeordnet ist, so daß ein Lageregelkreis für das Arbeitsgerät gebildet wird. Bei diesem angehängten Pflug handelt es sich jedoch nicht um einen Drehpflug, bei dem eine besondere, über den Totpunkt hinweggehende Steuerung eines Wendezylinders erforderlich ist.

### Vorteile der Erfindung

Die erfindungsgemäße Einrichtung zum Wenden eines an einem landwirtschaftlichen Fahrzeug angelenkten Anbaugeräts, insbesondere eines an einen Traktor angebauten Drehpfluges, mit den kennzeichnenden Merkmalen des Hauptanspruchs hat demgegenüber den Vorteil, daß mit ihr eine Betätigung des Drehvorganges bei Drehpflügen mit Hilfe traktorseitig angeordneter, elektrisch ansteuerbarer Regelventile möglich ist, die in die Traktor-Arbeitshydraulik geschaltet sind. Als Regelventile kommen dabei Mehrwegeventile in Frage, die keine Freigangstellung aufweisen müssen. Dabei wird die Erkenntnis ausgenutzt, daß beim Wenden des Drehpfluges ein Umschalten des Regelventils im oberen Totpunkt des Wendezylinders möglich ist. Dabei lassen sich verschiedene Sensormittel für die Erfassung der oberen Totpunktlage des Wendezylinders verwenden. Durch den Einsatz der traktorseitig gelegenen Ventile und der Steuerelektronik kommen Komponenten zum Einsatz, die sich gut für unterschiedliche Gerätekonfigurationen am Traktor eignen. Ferner erlaubt die Einrichtung einen vereinfachten Aufbau der pflugseitig gelegenen Betätigungseinrichtung, da auf ein spezielles, meist mechanisch umsteuerbares Wendeventil auf dem Pflug verzichtet werden kann. Als Wendezylinder kann dabei ein konventioneller Differentialzylinder eingebaut werden. Die Anzahl der elektrischen Schnittstellen zwischen Traktor und Pflug für Sensor- oder Ansteuerleitungen werden zudem verringert. Mit der Einrichtung läßt sich ein automatisierbarer, feinfühliger, reproduzierbarer Ablauf des Drehvorganges des Pfluges am Feldende erreichen, so daß sich insgesamt ein harmonischer Ablauf ergibt. Für diesen Zweck läßt sich in vorteilhafter Weise die ohnedies vorhandene Steuerelektronik der elektrohydraulischen Hubwerks-Regeleinrichtung verwenden. Die Einrichtung baut zudem platzsparend und kostengünstig.

Durch die in den Unteransprüchen aufgeführten Maßnahmen sind vorteilhafte Weiterbildungen und Verbesserungen der im Hauptanspruch angegebenen Einrichtung möglich. Eine besonders genaue, sichere und kostengünstige Arbeitsweise der Einrichtung läßt sich erreichen, wenn gemäß den Ansprüchen 2 und 3 ein elektromechanischer Winkelsensor zur Umsteuerung des Regelventils in der oberen Totpunktlage des Wendezylinders verwendet wird. Dabei ergibt sich eine besonders einfache Bauweise bei einer Anordnung des Winkelsensors auf dem Anbaugerät gemäß Anspruch 3, wobei der geringe Aufwand für eine elektrische Steckverbindung zwischen Pflug und Traktor in Kauf genommen werden kann. Eine besonders einfache, sichere und robuste Bauweise der Einrichtung läßt sich erreichen, wenn gemäß Anspruch 4 als Sensormittel ein elektrohydraulischer Drucksensor verwendet wird. Auf diese Weise lassen sich für die Steuerung des Drehvorganges die Druckerhöhungen in blockierten Zylinderlagen nutzen, wobei diese Druckerhöhungen infolge von mechanischen Endanschlägen und im oberen Totpunkt des Wendezylinders auftreten können. Besonders günstig ist dabei eine Ausführung nach Anspruch 5, wenn dieser Drucksensor fahrzeugseitig angeordnet wird. Damit wird eine elektrische Schnittstelle zwischen Traktor und Pflug eingespart, die auf Dauer kritisch werden könnte. Weitere vorteilhafte Anordnungen des Drucksensors ergeben sich aus den Ansprüchen 6 bis 8. Der Bauaufwand für die Einrichtung wird besonders gering gehalten, wenn gemäß Anspruch 10 die Steuerglieder für die Arbeitsprozesse einerseits und andererseits für die Verstellfunktionen möglichst integriert werden. Äußerst vorteilhaft ist es, wenn gemäß den Ansprüchen 11 und 12 für die Breitenverstellung des Drehpfluges ein zusätzlicher Stellzylinder vorgesehen ist, um somit eine automatisch und harmonisch ablaufende Pflugverstellung am Feldende zu ermöglichen. Weitere vorteilhafte Ausgestaltungen ergeben sich aus den übrigen Ansprüchen, der Beschreibung sowie der Zeichnung.

### Zeichnung

Zwei Ausführungsbeispiele der Erfindung sind in der Zeichnung dargestellt und in der nachfolgenden Beschreibung näher erläutert.

Es zeigen
- Figur 1: in vereinfachter Darstellung eine Seitenansicht eines Traktors mit elektrohydraulischer Hubwerks-Regeleinrichtung und mit angelenktem Drehpflug sowie mit einem ersten Ausführungsbeispiel der erfindungsgemäßen Einrichtung zur Steuerung des Drehpfluges, wobei diese Einrichtung mit Drucksensor arbeitet,
- Figur 2: zeigt eine stark vereinfachte, schematische Darstellung der erfindungsgemäßen Einrichtung nach Figur 1, jedoch ohne Traktor und elektrohydraulischer Hubwerks-Regeleinrichtung und
- Figur 3: zeigt eine stark vereinfachte, schematische Darstellung einer zweiten Ausführungsform einer erfindungsgemäßen Einrichtung, die mit einem Winkelsensor arbeitet.

### Beschreibung der Ausführungsbeispiele

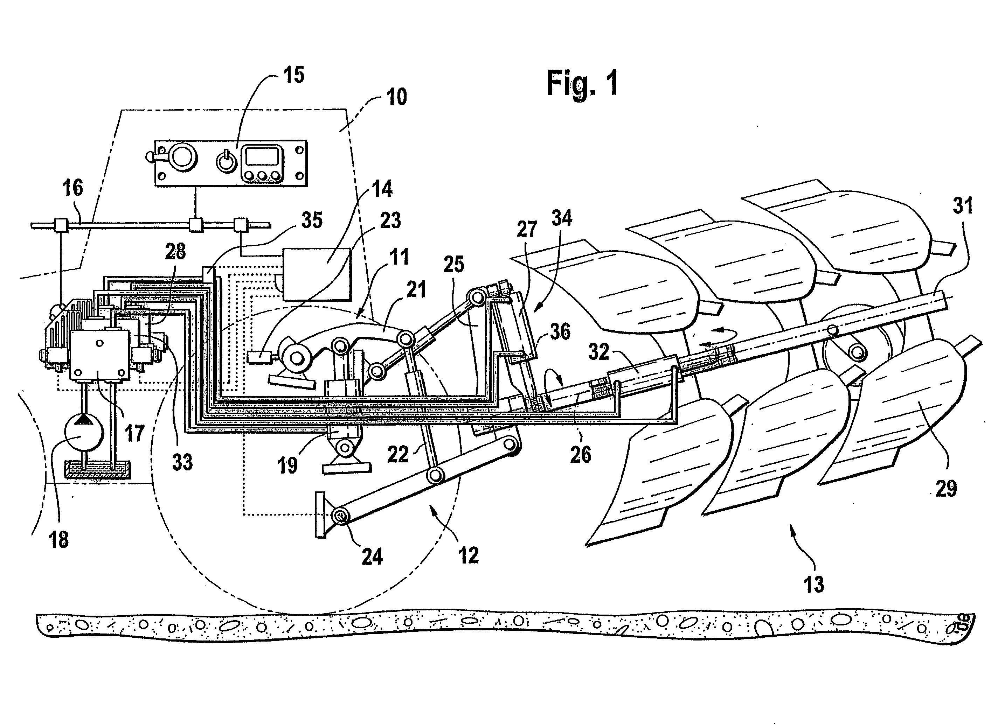

Die Figur 1 zeigt in vereinfachter Darstellung in Seitenansicht einen Traktor 10 mit einer elektrohydraulischen Hubwerks-Regeleinrichtung 11, an deren heckseitigen Dreipunktgestänge 12 ein Drehpflug 13 angelenkt ist.

Die an sich bekannte Hubwerks-Regeleinrichtung 11 weist dabei eine Steuerelektronik 14 auf, die über einen CAN-Bus 16 von einem Bedienteil 15 mit Steuersignalen versorgt wird und davon abhängig ein elektrisch ansteuerbares Hubwerks-Regelventil 17 ansteuert, das von einer Pumpe 18 mit Druckmittel versorgt wird. Das Hubwerk-Regelventil 17 steuert einen hydraulischen Kraftheber 19, der an einem einarmigen Hubarm 21 angreift. Der Hubarm 21 ist über eine Hubstange 22 mit den Unterlenkern des Dreipunktgestänges 12 gekoppelt. Ferner sind am Hubarm 21 ein üblicher Lagesensor 23 und am Unterlenker ein Kraftsensor 24 angeordnet, deren Signale der Steuerelektronik 14 zugeführt werden. Mit dieser elektrohydraulischen Hubwerks-Regeleinrichtung 11 können mit dem Drehpflug 13 die üblichen Arbeitsprozesse durchgeführt werden, so daß zum Beispiel beim Pflügen eine Lageregelung, eine Kraftregelung oder eine Mischregelung durchführbar sind.

Wie Figur 1 ferner zeigt, ist der Drehpflug 13 mit einem Anbaukopf 25 an dem Dreipunktgestänge 12 angelenkt. Damit der Drehpflug 13 in seiner Längsachse um 180 Grad verdrehbar ist, ist er über eine Drehachse 26 in dem Anbaukopf 25 schwenkbar gelagert. Zum Verdrehen des Drehpfluges 13 um seine Längsachse dient ein als Differentialzylinder ausgebildeter, doppeltwirkender Wendezylinder 27, der einerseits an dem Anbaukopf 25 angreift und andererseits am Rahmen des Drehpfluges 13 befestigt ist. Dieser Wendezylinder 27 wird hydraulisch von einem ersten Regelventil 28 gesteuert, das als 4/3-Wegeventil ausgeführt ist und traktorseitig nahe dem Hubwerk-Regelventil 17 angeordnet ist. Das Regelventil 28 ist somit in den hyraulischen Arbeitskreis auf dem Traktor 10 geschaltet.

Wie die Figur 1 ferner zeigt, weist der Drehpflug drei Doppel-Pflugkörper 29 auf, die paarweise an einem ausschwenkbaren Pflugrahmen 31 befestigt sind. Um die Arbeitsbreite beim Pflügen verstellbar zu machen, ist am Drehpflug 13 in an sich bekannter Weise der Pflugrahmen 31 über einen doppeltwirkenden Stellzylinder 32 schwenkbar angeordnet, wie dies bei solchen Vario-Drehpflügen bereits Standard ist. Der doppeltwirkende Stellzylinder 32 ist ebenfalls als Differentialzylinder ausgeführt und wird von einem zweiten Regelventil 33 angesteuert, das ebenfalls auf der Traktorseite neben dem Hubwerks-Regelventil 17 angeordnet ist und in die traktorseitige Arbeitshydraulik geschaltet ist. Bei den beiden Regelventilen 28 und 33 für die Verstellfunktionen am Drehpflug 13 handelt es sich um gleichartige Ventile, die jeweils eine elektrohydraulische Ansteuerung haben, mit einer Individualdruckwaage arbeiten sowie eine geregelte Ventilschieberlage aufweisen, so daß mit ihnen reproduzierbare, abgeglichene Ventilkennlinien steuerbar sind, so daß unabhängig von sich ändernden Lastdrücken stets der Ansteuerung proportionale Volumenströme erzielbar sind. Beide Regelventile 28 und 33 sind von der Steuerelektronik 14 elektrisch ansteuerbar. Der Wendezylinder 27, der Stellzylinder 32, die beiden Regelventile 28 und 33 sowie die Steuerelektronik 14 sind somit Teile einer Einrichtung 34, die zum Wenden des am Traktor 10 angebauten Drehpfluges 13 dient. Ferner gehört zu dieser Einrichtung 34 noch ein Sensormittel, das beim Pflugdrehvorgang die obere Totpunktlage des Wendezylinders 27 erfaßt und das hier als ein Drucksensor 35 ausgeführt ist; dieser Drucksensor 35 ist auf der Seite des Traktors 10 angeordnet und ermittelt den im unteren Ringraum 36 des Wendezylinders 27 auftretenden Druck.

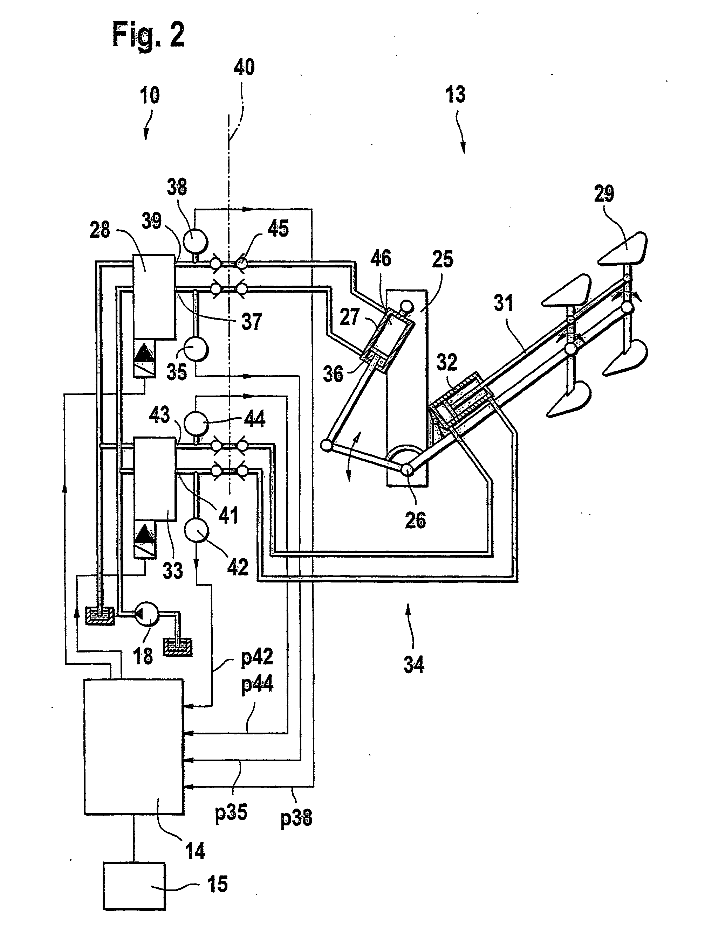

Die Figur 2 zeigt nun diese erfindungsgemäße Einrichtung 34 zum Verstellen des Drehpfluges 13 nach Figur 1 in einer stark vereinfachten, schematischen Darstellung, bei der jedoch zum besseren Verständnis der Traktor 10 sowie die zugehörige elektrohydraulische Hubwerks-Regeleinrichtung 11 weggelassen sind. Im übrigen sind jedoch gleiche Bauelemente wieder mit gleichen Bezugszeichen versehen. Wie die Figur 2 ferner zeigt, ist neben dem ersten Drucksensor 35 am ersten Anschluß 37 des ersten Regelventils 28 ein zweiter Drucksensor 38 am zweiten Anschluß 39 desselben Ventils angeordnet. Ferner sind an einem ersten Anschluß 41 des zweiten Regelventils 33 für den Stellzylinder 32 ein dritter Drucksensor 42 sowie in entsprechender Weise am zweiten Anschluß 43 ein vierter Drucksensor 44 angeordnet. Die Signale aller dieser Drucksensoren 35, 38, 42, 44 werden der Steuerelektronik 14 zugeführt. An der Schnittstelle 40 zwischen Traktor 10 und Drehpflug 13 werden die hydraulischen Leitungen zum Wendezylinder 27 und zum Stellzylinder 32 durch Hydrokupplungen 45 verbunden.

Die Arbeitsweise des Traktors 10 mit seinen Einrichtungen 11 und 34 wird wie folgt erläutert:

Beim Arbeitsprozess "Pflügen" arbeitet der Traktor 10 in an sich bekannter Weise mit der elektrohydraulischen Hubwerks-Regeleinrichtung 11, wobei die unteren Pflugkörper des Drehpfluges 13 so im Boden geführt werden, daß die am Bedienteil 15 eingestellte Regelungsart, wie zum Beispiel Kraft-, Lage-, Misch-Regelung, durchgeführt wird. Erreicht der Traktor 10 das Feldende, so muß der Drehpflug 13 aus dem Boden ausgehoben und gewendet werden, bevor der Traktor 10 wendet und in entgegengesetzter Richtung weiterpflügt. Dieser mehrstufige Pflug-Wendevorgang läßt sich nun mit der Einrichtung 34 durchführen, wobei die traktorseitig vorhandene Steuerelektronik 14 mit den traktorseitig vorhandenen, elektrisch ansteuerbaren Regelventilen 28 und 33 den mehrstufigen Wendevorgang automatisch steuert. Dieses Pflugmanagement für den Drehpflug 13 wird in Gang gesetzt, indem der Fahrer nach dem Pflügen am Feldende einen Aushubschalter in dem Bedienteil 15 betätigt. Dadurch wird über die Hubwerks-Regeleinrichtung 11 der Drehpflug 13 in seine obere Aushubstellung bzw. Transportstellung ausgehoben. Hat der Drehpflug 13 diese ausgehobene Stellung erreicht, so steuert die Steuerelektronik 14 über das zweite Regelventil 33 den Stellzylinder 32 an, so daß dieser durch ein Einschwenken des Pflugrahmens 31 den Pflug auf minimale Breite verstellt. Dieses Einschwenken ist erforderlich, um ein mögliches Aufschlagen des Drehpfluges 13 beim anschließenden Drehvorgang auf dem Boden zu verhindern. Es sei dabei angenommen, daß das zweite Regelventil 33 über seinen zweiten Anschluß 43 einen Druckmittelstrom zum Zylinderraum des Stellzylinders 32 steuert, um das Einschwenken auf minimale Breite vorzunehmen. Erreicht der Stellzylinder 32 die Endstellung für minimale Breite, die z.B. durch einen mechanischen Anschlag definiert sein kann, so führt dies zu einem Druckanstieg im zweiten Anschluß 43, der vom vierten Drucksensor 44 erkannt wird und als Signal der Steuerelektronik 14 zugeführt wird. Dadurch kann die Steuerelektronik 14 das zweite Regelventil 33 in seine Mittelstellung zurückstellen und den anschließenden Drehvorgang einleiten.

Für diesen Wendevorgang des Drehpfluges 13 wird das erste Regelventil 28 von der Steuerelektronik 14 in eine Arbeitsstellung verstellt, bei der Druckmittel über den ersten Anschluß 37 in den Ringraum 36 des Wendezylinders 27 strömt. Der Wendezylinder 27 fährt in der in Figur 2 gezeigten Position ein, bis er in der kürzesten Lage den oberen Totpunkt erreicht. Dieser Wendezylinder 27 ist Teil einer Drehvorrichtung, die einem Schubkurbelgetriebe mit dem Wendezylinder 27 als Aktuator entspricht. Es baut sich daher in der oberen Totlage des Wendezylinders 27 ein hoher Druck auf, der als Information für das Erreichen dieser charakteristischen Position genutzt wird. Für die Erkennung dieser Totpunktlage des beidseitig hydraulisch beaufschlagten Wendezylinders 27 ist der erste Drucksensor 35 nahe dem Anschluß 37 vorgesehen. Damit kann aus dem steil ansteigenden Druckverlauf im Arbeitsanschluß 37 des ersten Regelventils 28 auf die Erreichung der Totpunktlage geschlossen werden. Diese Information des Drucksensors 35 wird von der Steuerelektronik 14 verarbeitet und zur Umsteuerung des elektrisch betätigten Regelventils 28 am Traktor 10 benutzt. Ein Steuerschieber im ersten Regelventil 28 wird dabei von einer Arbeitsstellung durch seine Mittelstellung hindurch in die entgegengesetzte Arbeitsstellung ausgelenkt, so daß anschließend der von der Pumpe 19 kommende Druckmittelstrom über den zweiten Anschluß 39 in den Zylinderraum 46 des Wendezylinders 27 geführt wird. Dadurch wird der Wendezylinder 27 wieder ausgefahren, wobei der Drehpflug 13 um 180 Grad um seine Längsachse gedreht wird. Am Ende dieses Drehvorgangs wird vom zweiten Drucksensor 38 wiederum ein Druckanstieg registriert, wenn die Endlage des Drehantriebs infolge von mechanischen Anschlägen erreicht wird. Diese Information des Drucksensors 38 benutzt die Steuerelektronik 14 dazu, um das erste Regelventil 28 in seine mittlere Sperrstellung zurückzustellen. Ferner wird diese Information von der Vollendung der Drehbewegung dazu genutzt, daß die Steuerelektronik 14 über das zweite Regelventil 33 den Stellzylinder 32 so steuert, daß ein Ausschwenken des Pflugrahmens 31 auf seine ursprünglich eingestellte Arbeitsbreite erzielt wird. Hat der Pflug die ursprünglich eingestellte Schnittbreite wieder erreicht, so kann der Stellzylinder 32 dabei gegen einen mechanischen Anschlag fahren, wobei der auftretende Druckanstieg vom dritten Drucksensor 42 erfaßt und der Steuerelektronik 14 gemeldet wird. Die Steuerelektronik 14 kann daraufhin über die Hubwerks-Regeleinrichtung 11 den Drehpflug 13 in seine Arbeitsposition absenken.

Mit der Einrichtung 34 zum Wenden des Drehpfluges 13 läßt sich somit am Feldende ein Pflugmanagement durchführen, wobei die traktorseitige Prozeßsteuerung durch die Steuerelektronik 14 ein weitgehend automatisches Ablaufen der am Feldende zu bedienenden Funktionen vorsieht. Dieses Pflugmanagement wird vom Traktorfahrer nur durch das Betätigen des Aushubschalters im Bedienteil 15 und durch das Erreichen einer definierten Aushubhöhe des Dreipunktgestänges 12 gestartet. Der Pflugrahmen 31 wird wie beschrieben eingeschwenkt, gedreht und wieder ausgeschwenkt. Die Steuerungen erhalten dabei die Positionssignale der beiden Differentialzylinder von den Drucksensoren 35, 38, 42, 44. Entscheidend ist dabei, daß das Umschalten des ersten Regelventils 28 im oberen Totpunkt des Wendezylinders 27 erfolgt, wobei ein Umschalten in einen Freigang nicht erforderlich ist. Ferner ist die Steuerung des Drehvorgangs durch die Nutzung von Druckerhöhungen in blockierten Zylinderlagen möglich, wobei diese durch mechanische Endanschläge und den oberen Totpunkt des Wendezylinders 27 markiert sind.

Mit den Drucksensoren 35 und 38 können auch die Druckverhältnisse zu Beginn des Drehvorganges am Wendezylinder 27 gemessen werden. Sinn dieser Messung ist eine Klassifizierung des Drehpfluges, ob er nämlich eine ziehende oder eine fallende Charakteristik aufweist, um dementsprechend verschiedene Ablaufsteuerungen zu durchlaufen. Außerdem läßt sich der nötige Umschaltdruck im oberen Totpunkt des Wendezylinders 27 ermitteln, so daß der Drehvorgang besonders harmonisch abläuft. Fallende und Ziehende Pflüge sind entweder im ersten oder im zweiten Drehabschnitt selbstantreibend. Zur zwangsgeführten Drehbewegung ist es durch dieses unterschiedliche Verhalten nötig, je ein Drosselrückschlagventil im Anschluß beider Seiten des Wendezylinders 27 vorzusehen. Dies kann ein einfaches, kostengünstiges Ventil für den Direkteinbau sein. Durch eine einmalig dem Drehpflug angepasste Drossel können mit der gleichen traktorseitigen Steuerung die unterschiedlichen, dem Traktor 10 angepassten Pflugeinstellungen angesteuert werden.

Durch die Ausbildung der Einrichtung 34 mit der gezeigten Anordnung der Drucksensoren ergeben sich die vorteilhaften Eigenschaften, daß sämtliche Sensoren 35, 38, 42, 44 sich auf dem Traktor 10 befinden, somit keine Verkabelung zum Drehpflug 13 besteht. Ferner ist kein mechanischhydraulischer Umsteuerblock auf dem Drehpflug notwendig. Ferner ergeben sich mit den Drucksensoren feste Drehwinkeleinstellungen; zudem sind die Drucksensoren auch für andere Geräte flexibel einsetzbar. Bei der Einrichtung 34 werden Regelventile 28, 33 verwendet, die mit Individualdruckwaage, lagegeregeltem Steuerschieber und elektro-hydraulischer Ansteuerung arbeiten und die somit einen reproduzierbaren, lastunabhängigen Ölstrom steuern können, somit eine hohe Volumenstromkonstanz aufweisen. Für die Steuerung des Schwenkvorgangs am Drehpflug 13 ist es deshalb auch möglich, auf die dem Stellzylinder 32 zugeordneten Drucksensoren 42, 44 zu verzichten und dafür mit einer reinen Zeitsteuerung zu arbeiten, mit der eine zuvor festgelegte Schwenkposition und damit Arbeitsbreite des Pfluges wiedergefunden werden kann. Das bedeutet, daß das zweite Regelventil 33 durch eine definierte zeitliche Ansteuerung beim Einschwenken des Stellzylinders 32 sowie eine entsprechende zeitliche Ansteuerung beim nachfolgenden Ausschwenken den Schwenkvorgang durchführt.

Anstelle der beschriebenen reinen Zeitsteuerung kann der Schwenkvorgang auch durch eine kombinierte Drucksensor-Zeitsteuerung durchgeführt werden, die eine hohe Genauigkeit beim Einstellen ermöglicht. Dabei kann bei gleichzeitiger Verwendung der Drucksensoren 42, 44 durch zusätzliche Verwendung der Zeitdauer beim Einschwenken des Stellzylinders 32 auf die benötigte Zeitdauer und Aussteuerung des Regelventils 33 beim Ausschwenken geschlossen werden. Als Zeitdauer beim Einschwenken zählt dabei die Dauer vom Start des Einschwenkens bis zur Sensierung des Druckanstiegs bei Erreichen der eingeschwenkten Endlage. Durch diese kombinierte Steuerung kann die Schnittbreite auch für einen prozentualen Zeitanteil der gesamten Verstellzeit eingestellt werden, so daß also auch Zwischenstellungen zwischen den Endlagen ansteuerbar sind. Für das Ansteuern dieser Zwischenlagen muß die prozentuale Dauer zum Erreichen bestimmter Lagen einmal experimentell aufgenommen werden.

Anstelle der in Figur 2 aufgezeigten Konfiguration der Drucksensoren 35, 38, 42, 44 sind auch andere Alternativen vorstellbar. Obwohl die Anordnung je eines Drucksensors an jedem Arbeitsanschluß der beiden Regelventile 38, 33 besonders zweckmäßig ist, kann auch mit einem einzelnen Drucksensor pro Regelventil 28, 33 gearbeitet werden. Dabei wird der im Regelventil rückgeführte Lastdruck sensiert; dies ist der ventilintern auf die Individualdruckwaage zurückgeführte Lastdruck. Die logische Zuordnung zum jeweils betreffenden Arbeitsanschluß des Regelventils erfolgt dabei intern über die Steuerelektronik 14 zusammen mit der Kenntnis der Aussteuerrichtung der Regelventile 28, 33. Eine weitere Alternative der Drucksensor-Konfiguration besteht darin, jedem Regelventil 28 bzw. 33 einen einzelnen Drucksensor zuzuordnen, der über zusätzliche Wechselventile an die jeweils beiden Arbeitsanschlüsse 37, 39 bzw. 41, 43 angeschlossen ist, so daß der jeweils höhere Druck gemessen wird.

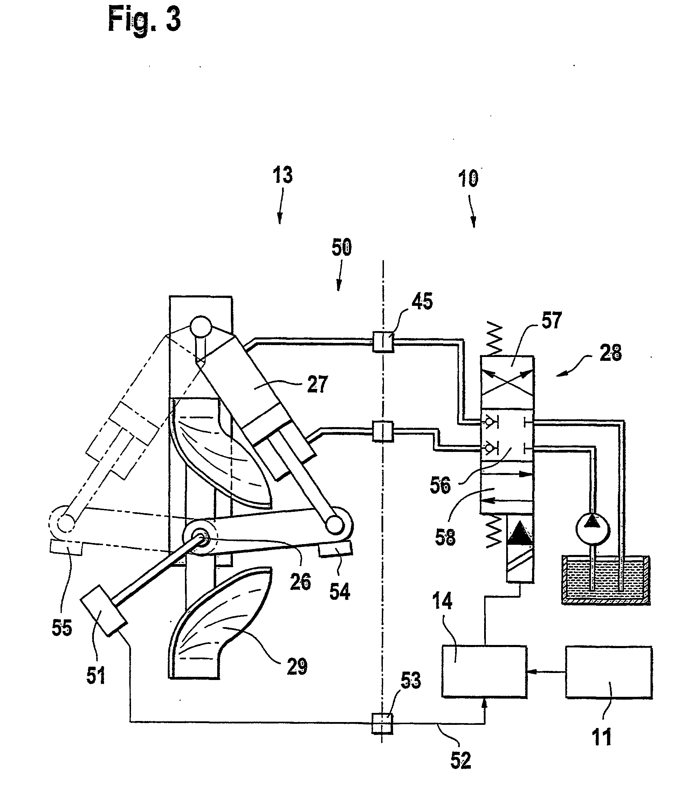

Die Figur 3 zeigt eine stark vereinfachte, schematische Darstellung einer zweiten Ausführungsform einer erfindungsgemäßen Einrichtung 50 zum Wenden eines an einem Traktor angebauten Drehpfluges, wobei gleiche Bauelemente wie in Figur 2 auch mit gleichen Bezugszeichen versehen sind. Die zweite Einrichtung 50 unterscheidet sich von der ersten Einrichtung 34 nach Figur 2 vor allem dadurch, daß sie als Sensormittel zur Feststellung der oberen Totpunktlage im Wendezylinder 27 einen Winkelsensor 51 verwendet, der mit der Drehachse 26 mechanisch gekoppelt ist. Der elektromechanische Winkelsensor 51 ist über eine Signalleitung 52 mit der Steuerelektronik 14 verbunden. Dadurch ist neben den Hydrokupplungen 45 eine zusätzliche elektrische Steckkupplung 53 erforderlich. Die beiden um 180 Grad verdrehten Endlagen des Drehpfluges 13 sind nun durch Anschläge 54 und 55 markiert. Das erste Regelventil 28 ist hier vereinfacht als 4/3-Wegeventil dargestellt, das neben einer federzentrierten Sperrstellung 56 zwei Arbeitsstellungen 57 und 58 aufweist.

Die Wirkungsweise der zweiten Einrichtung 50 entspricht in Bezug auf den Drehvorgang des Drehpfluges 13 der Wirkungsweise der ersten Einrichtung 34. Im Unterschied zur ersten Einrichtung nach Figur 2 meldet bei der zweiten Einrichtung 50 der Winkelsensor 51 stetig der Drehlage des Drehpflugs 13 entsprechende Signale an die Steuerelektronik 14 und somit auch die Totpunktlage des Wendezylinders 27. Bei Erreichen der Totpunktlage des Wendezylinders 27 wird das erste Regelventil 28 aus seiner einen Arbeitsstellung 58 in die andere Arbeitsstellung 57 verstellt, so daß der Drehpflug 13 um 180 Grad geschwenkt wird, wobei der Wendezylinder 27 die gestrichelt dargestellte Lage erreicht, welche durch den Anschlag 55 begrenzt wird. Der Winkelsensor 51 kann als einfaches Drehpotentiometer ausgebildet werden, das eine ständige Winkellageninformation des Drehwinkels liefert. Mit der zweiten Einrichtung 50 mit der Winkelsensorsteuerung läßt sich somit ein mechanischhydraulischer Umsteuerblock auf dem Drehpflug selbst einsparen. Der Winkelsensor 51 erlaubt zudem eine komfortable Einstellung des Drehwinkels.

Selbstverständlich sind an den gezeigten Ausführungsbeispielen Änderungen möglich, ohne vom Gedanken der Erfindung abzuweichen. So kann die zweite Einrichtung 50 nach Figur 3 dahingehend erweitert werden, daß auch für den Schwenkvorgang zur Arbeitsbreiteneinstellung zusätzliche Winkelsensoren verwendet werden, welche den Schwenkwinkel am Pflugrahmen 31 ermitteln. Die aufgezeigten Einrichtungen lassen sich auch zur Steuerung andersartiger Anbaugeräte einsetzen, bei denen vergleichbare Bewegungsabläufe zu steuern sind. Die Einrichtung zum Wenden des Drehpfluges kann sowohl bei Anbaupflügen wie auch bei Aufsattelpflügen verwendet werden.

Obwohl die Drucksteuerung nach Figur 2 mit vier Drucksensoren besonders vorteilhaft ist, kann es bei Bedarf auch zweckmäßig sein, eine Drucksensorsteuerung für den einen Differentialzylinder mit einer Winkelsensorsteuerung für den anderen Differentialzylinder des Drehpflugs zu kombinieren.

## Patentansprüche

1. Einrichtung zum Wenden eines an einem landwirtschaftlichen Fahrzeug angelenkten Anbaugeräts, insbesondere eines an einem Traktor angebauten Drehpfluges, mit einem gegenüber einem Anbaukopf um eine Drehachse drehbaren Geräteteil und mit einer hydraulischen Drehvorrichtung, die einen doppeltwirkenden Wendezylinder aufweist, der einerseits am Anbaukopf und andererseits für die Drehung des Geräteteils um seine Drehachse an dem Geräteteil angreift, und mit ersten Steuermitteln zur Richtungssteuerung des Druckmittelstroms zum Wendezylinder, wobei das Steuermittel wenigstens zwei Arbeitsstellungen beiderseits einer Neutralstellung aufweist und fahrzeugseitig angeordnet ist, sowie mit zweiten Steuermitteln zur Umsteuerung des Druckmittelstroms, wenn der Wendezylinder seine obere Totpunktlage durchläuft, sowie mit Sensormitteln, welche die obere Totpunktlage des Wendezylinders sensieren und davon abhängig eine Umsteuerung der zweiten Steuermittel bewirken, **dadurch gekennzeichnet, daß** die ersten und zweiten Steuermittel gemeinsam von einem elektrisch ansteuerbaren Regelventil (28) gebildet werden, das auf der Fahrzeugseite (10) angeordnet ist und daß das Regelventil (28) von einer Steuerelektronik (14) ansteuerbar ist, die mit den Sensormitteln (35; 51) in Wirkverbindung steht und die abhängig von den Signalen der Sensormittel eine Umsteuerung des Regelventils (28) beim Durchlaufen der Totpunktlage im Wendezylinder (27) steuert.

2. Einrichtung nach Anspruch 1, **dadurch gekennzeichnet, daß** als Sensormittel ein elektromechanischer Winkelsensor (51) verwendet wird, der die Drehbewegung des drehbaren Geräteteils (31) um die Drehachse (26) erfaßt und entsprechende elektrische Signale der Steuerelektronik (14) zuführt.

3. Einrichtung nach Anspruch 1 oder 2,. **dadurch gekennzeichnet, daß** der Winkelsensor (51) auf dem Anbaugerät (13) angeordnet ist und über eine elektrische Steckverbindung (53) mit der Steuerelektronik (14) auf der Fahrzeugseite (10) verbunden ist.

4. Einrichtung nach Anspruch 1, **dadurch gekennzeichnet, daß** die Sensormittel als mindestens ein elektrohydraulischer Drucksensor (35) ausgebildet sind, der ein von der oberen Totpunktlage des Wendezylinders (27) abhängiges Signal an die Steuerelektronik (14) liefert.

5. Einrichtung nach Anspruch 4, **dadurch gekennzeichnet, daß** der Drucksensor (35) auf der Fahrzeugseite (10) angeordnet ist.

6. Einrichtung nach Anspruch 4 oder 5, **dadurch gekennzeichnet, daß** den beiden Arbeitsanschlüssen (37, 39) des dem Wendezylinder (27) zugeordneten Regelventils (28) jeweils ein Drucksensor (35, 38) zugeordnet ist.

7. Einrichtung nach Anspruch 4 oder 5, **dadurch gekennzeichnet, daß** dem Regelventil (28) ein einzelner Drucksensor zugeordnet ist, der den auf eine Individual-Druckwaage im Regelventil (28) zurückgeführten Lastdruck sensiert.

8. Einrichtung nach Anspruch 4 oder 5, **dadurch gekennzeichnet, daß** ein einzelner Drucksensor vorgesehen ist, der über Wechselventile an beide Arbeitsanschlüsse des Regelventils (28) so angeschlossen ist, daß der jeweils höhere Druck abgegriffen wird.

9. Einrichtung nach einem der Ansprüche 1 bis 8, **dadurch gekennzeichnet, daß** den Endlagen des Wendezylinders (27) mechanische Anschläge (54, 55) zugeordnet sind.

10. Einrichtung nach einem oder mehreren der Ansprüche 1 bis 9, **dadurch gekennzeichnet, daß** das Fahrzeug mit angelenktem Anbaugerät ein Traktor (10) mit angebautem Drehpflug,(13) ist, in dessen elektrohydraulischer Hubwerks-Regeleinrichtung (11) das Regelventil (28) für die Verstellfunktion des Wendezylinders (27) geschaltet ist.

11. Einrichtung nach einem der Ansprüche 1 bis 10, **dadurch gekennzeichnet, daß** ein zusätzlicher Stellzylinder (32) für die Arbeitsbreitenverstellung des Drehpfluges (13) vorgesehen ist, der von einem zweiten, elektrisch ansteuerbaren Regelventil (33) steuerbar ist, das traktorseitig angeordnet ist.

12. Einrichtung nach Anspruch 11, **dadurch gekennzeichnet, daß** mindestens ein elektrohydraulischer Drucksensor (42, 44) angeordnet ist, der unter Ausnutzung von Druckerhöhungen in blockierten Lagen des Stellzylinders (32) entsprechende Signale an die Steuerelektronik (14) gibt.

13. Einrichtung nach Anspruch 12,. **dadurch gekennzeichnet, daß** der Drucksensor (42, 44) für den Stellzylinder (32) traktorseitig angeordnet ist.

14. Einrichtung nach einem oder mehreren der Ansprüche 1 bis 13, **dadurch gekennzeichnet, daß** jedes Regelventil (28, 33) für die Verstellfunktion des Drehpfluges (13) mit Individual-Druckwaage, lagegeregeltem Ventilschieber und elektrohydraulischer Ansteuerung ausgerüstet ist, so daß es reproduzierbare, abgeglichene Ventilkennlinien für eine volumenstromkonstante Steuerung aufweist.

15. Einrichtung nach einem der Ansprüche 1 bis 14, **dadurch gekennzeichnet, daß** das vom Stellzylinder (32) und vom Wendezylinder (27) gesteuerte Pflugmanagement mit Einschwenken, Drehen und Ausschwenken automatisch von der Steuerelektronik (14) gesteuert wird, die zugleich der elektrohydraulischen Hubwerks-Regeleinrichtung (11) des Traktors (10) zugeordnet ist.

16. Einrichtung nach einem der Ansprüche 11 bis 15, **dadurch gekennzeichnet, daß** bei der Arbeitsbreitenverstellung des Drehpfluges (13) durch den Stellzylinder (32) mittels eines kombinierten Drucksensor-Zeitsteuerung-Verfahrens zwischen den Endstellungen liegende Zwischenstellungen anfahrbar sind.

## Claims

1. Device for turning a mounted implement coupled to an agricultural vehicle, in particular a rotary plough mounted on a tractor, having an implement part which can be rotated about an axis of rotation in relation to a mounting head and having a hydraulic rotating device which has a double-action turning cylinder which acts, on the one hand, on the mounting head and, on the other hand, on the implement part for rotation of the implement part about its axis of rotation, and having first control means for the directional control of the flow of pressure medium to the turning cylinder, the control means having at least two working positions on both sides of a neutral position and being arranged on the vehicle side, and having two control means for reversing the flow of pressure medium when the turning cylinder passes through its upper dead centre position, and having sensor means which sense the upper dead centre position of the turning cylinder and, as a function thereof, bring about a reversing of the second control means, **characterized in that** the first and second control means are jointly formed by an electrically activatable regulating valve (28) which is arranged on the vehicle side (10), and **in that** the regulating valve (28) can be activated by an electronic control system (14) which is operatively connected to the sensor means (35; 51) and which, as a function of the signals from the sensor means, controls a reversing of the regulating valve (28) when the dead centre position in the turning cylinder (27) is passed through.

2. Device according to Claim 1, **characterized in that** as the sensor means use is made of an electromechanical angle sensor (51) which detects the rotational movement of the rotatable implement part (31) about the axis of rotation (26) and supplies corresponding electric signals to the electronic control system (14).

3. Device according to Claim 1 or 2, **characterized in that** the angle sensor (51) is arranged on the mounted implement (13) and is connected to the electronic control system (14) on the vehicle side (10) via an electric plug-in connection (53).

4. Device according to Claim 1, **characterized in that** the sensor means are designed as at least one electrohydraulic pressure sensor (35) which supplies a signal dependent on the upper dead center position of the turning cylinder (27) to the electronic control system (14).

5. Device according to Claim 4, **characterized in that** the pressure sensor (35) is arranged on the vehicle side (10).

6. Device according to Claim 4 or 5, **characterized in that** a respective pressure sensor (35, 38) is assigned to the two working connections (37, 39) of the regulating valve (28) assigned to the turning cylinder (27).

7. Device according to Claim 4 or 5, **characterized in that** the regulating valve (28) is assigned an individual pressure sensor which senses the load pressure fed back to an individual pressure balance in the regulating valve (28).

8. Device according to Claim 4 or 5, **characterized in that** an individual pressure sensor is provided and is connected via shuttle valves to the two working connections of the regulating valve (28) in such a manner that the higher pressure in each case is tapped off.

9. Device according to one of Claims 1 to 8, **characterized in that** the end positions of the turning cylinder (27) are assigned mechanical stops (54, 55).

10. Device according to one or more of Claims 1 to 9, **characterized in that** the vehicle with the mounted implement coupled to it is a tractor (10) with a rotary plough (13) mounted on it, with the regulating valve (28) for the adjustment function of the turning cylinder (27) being connected in the electrohydraulic lifting-mechanism regulating device (11) of the tractor.

11. Device according to one of Claims 1 to 10, **characterized in that** an additional adjusting cylinder (32) is provided for adjusting the working width of the rotary plough (13), the said adjusting cylinder being controllable by a second, electrically activatable regulating valve (33) which is arranged on the tractor side.

12. Device according to Claim 11, **characterized in that** at least one electrohydraulic pressure sensor (42, 44) is arranged, which, when pressure increases in blocked positions of the adjusting cylinder (32) are used, emits corresponding signals to the electronic control system (14).

13. Device according to Claim 12, **characterized in that** the pressure sensor (42, 44) for the adjusting cylinder (32) is arranged on the tractor side.

14. Device according to one or more of Claims 1 to 13, **characterized in that** each regulating valve (28, 33) for the adjusting function of the rotary plough (13) is equipped with an individual pressure balance, a position-regulated valve actuator and electrohydraulic activation, so that it has reproducible, balanced valve characteristic curves for a control ensuring a constant volumetric flow.

15. Device according to one of Claims 1 to 14, **characterized in that** the plough management, which is controlled by the adjusting cylinder (32) and by the turning cylinder (27), and is associated with swivelling the plough in, rotating it and swivelling it out is controlled automatically by the electronic control system (14) which is assigned at the same time to the electrohydraulic lifting-mechanism regulating device (11) of the tractor (10).

16. Device according to one of Claims 11 to 15, **characterized in that**, when adjusting the working width of the rotary plough (13) using the adjusting cylinder (32), intermediate positions situated between the end positions can be approached by means of a combined pressure-sensor/time-control process.

## Revendications

1. Installation pour retourner un équipement articulé sur un véhicule à usage agricole notamment une charrue réversible montée sur un tracteur, ayant une partie d'équipement tournant autour d'un axe de rotation par rapport à la tête de montage ainsi qu'un dispositif de retournement hydraulique ayant un vérin de retournement à double effet relié d'un côté à la tête de montage et de l'autre à la partie de l'appareil pour faire tourner la partie d'appareil autour de son axe de rotation ainsi que des premiers moyens de commande pour commander la direction suivant laquelle le flux de liquide hydraulique arrive dans le vérin de retournement,
le moyen de commande ayant au moins deux positions de travail de part et d'autre d'une position neutre et ce moyen est monté du côté du véhicule, ainsi que des seconds moyens de commande pour commuter le flux de liquide hydraulique lorsque le vérin de retournement passe par son point mort haut, ainsi que des moyens de détection qui détectent la position de point mort haut du vérin de retournement et produit en fonction de cette détection une commutation des seconds moyens de commande,
**caractérisée en ce que**
les premiers et seconds moyens de commande sont formés en commun par une électrovanne de régulation (28) commandée, installée du côté du véhicule (10) ; et
la vanne de régulation (28) peut être commandée par une électronique de commande (14) coopérant avec les moyens de détection (35, 51) et qui commande en fonction des signaux des moyens de détections, une commutation de la vanne de régulation (28) lorsqu'on passe le point mort dans le vérin de retournement (27).

2. Installation selon la revendication 1,
**caractérisée en ce que**
les moyens de détection sont constitués par un capteur électromécanique d'angle (51) qui détecte le mouvement de rotation de la partie rotative de l'appareil (31) autour de l'axe (26) et fournit les signaux électriques correspondants à l'électronique de commande (14).

3. Installation selon la revendication 1 ou 2,
**caractérisée en ce que**
le capteur d'angle (51) est installé sur un appareil monté (13) et il est relié par une connexion électrique (53) à l'électronique de commande (14) située du côté du véhicule (10).

4. Installation selon la revendication 1,
**caractérisée en ce que**
les moyens de détection sont réalisés par au moins un capteur électro-hydraulique de pression (35) fournissant à l'électronique de commande (14) un signal dépendant de la position de point mort haut du vérin de retournement (27).

5. Installation selon la revendication 4,
**caractérisée en ce que**
le capteur de pression (35) est prévu du côté (10) du véhicule.

6. Installation selon l'une des revendications 4 ou 5,
**caractérisée par**
un capteur de pression respectif (35, 38) associé aux deux branchements de travail (37, 39) de la vanne de régulation associée au vérin de retournement (27).

7. Installation selon la revendication 4 ou la revendication 5,
**caractérisée par**
un unique capteur de pression associé à la vanne de régulation (28) et qui détecte la pression de charge appliquée en retour à la balance de pression individuelle de la vanne de régulation (28).

8. Installation selon la revendication 4 ou 5,
**caractérisée par**
un seul capteur de pression raccordé par des vannes de commutation aux deux branchements de travail de la vanne de régulation (28) pour détecter chaque fois la pression la plus élevée.

9. Installation selon l'une des revendications 1 à 8,
**caractérisée par**
des butées mécaniques (54, 55) pour les positions de fin de course du vérin de retournement (27).

10. Installation selon l'une ou plusieurs des revendications 1 à 9,
**caractérisée en ce que**
le véhicule muni de l'équipement articulé est un tracteur (10) portant une charrue réversible (13) et dont l'installation électro-hydraulique de régulation (11) du mécanisme de levage commute la vanne de régulation (28) pour la fonction d'actionnement du vérin de retournement (27).

11. Installation selon l'une des revendications 1 à 10,
**caractérisée par**
un vérin d'actionnement supplémentaire (32) pour régler la largeur de travail de la charrue réversible (13), ce vérin étant commandé par une seconde électrovanne de régulation (33) installée du côté du tracteur.

12. Installation selon la revendication 11,
**caractérisée par**
au moins un capteur de pression électro-hydraulique (42, 44) fournissant des signaux correspondant à l'utilisation d'élévation de pression dans les positions bloquées du vérin d'actionnement (32) vers l'électronique de commande (14).

13. Installation selon la revendication 12,
**caractérisée en ce que**
le capteur de pression (42, 44) du vérin d'actionnement (32) est situé du côté du tracteur.

14. Installation selon l'une ou plusieurs des revendications 1 à 13,
**caractérisée en ce que**
chaque vanne de régulation (28, 33) est équipée d'un distributeur à tiroirs à commande électro-hydraulique, à position régulée et à balance de pression individuelle pour la fonction d'actionnement de la charrue réversible (13), pour avoir des caractéristiques de vannes compensées, reproductibles pour une commande à débit volumique constant.

15. Installation selon l'une des revendications 1 à 14,
**caractérisée en ce que**
la gestion de charrue commandée par le vérin d'actionnement (32) et le vérin de retournement (27) avec mouvement rentrant, retournement et déploiement est commandée automatiquement par l'électronique de commande (14) associée en même temps à l'installation électro-hydraulique de régulation (11) du mécanisme de levage du tracteur (10).

16. Installation selon l'une des revendications 11 à 15,
**caractérisée en ce que**
pour le réglage de la largeur de travail de la charrue réversible (13) par le vérin d'actionnement (32) à l'aide d'un procédé combiné de commande dans le temps et de capteur de pression, on peut venir dans des positions intermédiaires entre les positions de fin de course.
